# EUROPÄISCHE PATENTANMELDUNG

(11) **EP 1 600 752 A2**
(43) Veröffentlichungstag der Anmeldung: **30.11.2005**
(21) Anmeldenummer: 05103671.3
(22) Anmeldetag: 03.05.2005
(51) Int. Cl.: G01L 3/14

(54) **Elektrische Maschine mit Drehmomentmesseinrichtung**

(30) Priorität: 28.05.2004 AT 3842004 U
(71) Anmelder: Siemens Aktiengesellschaft Österreich, 1210 Wien (AT); SIEMENS AKTIENGESELLSCHAFT, 80333 München (DE)
(72) Erfinder: Grabmaier, Anton, 93197, Zeitlarn (DE); Hellinger, Leopold, 3710, Ziersdorf (AT); Neumann, Gerhard, 3231, St. Margarethen (AT)
(74) Vertreter: Berg, Peter

(57) **Zusammenfassung**

Elektrische Maschine, insbesondere Elektromotor mit einer Drehmomentmesseinrichtung, umfassend:
- ein Gehäuse (18) mit einem ringförmigen Gehäuseabschnitt (9), der einen nabenseitig festgelegten Gehäuseabschnitt (8) und einen gegenüber diesen drehbaren ständerseitigen Gehäuseabschnitt (3) drehelastisch so verbindet, dass die Rückwirkung eines Drehmoments an der Läuferwelle (6) den ständerseitigen Gehäuseabschnitt (3) gegenüber den nabenseitigen Gehäuseabschnitt (8) tordiert, und
- eine Messeinrichtung zum Erfassen der Torsion.

## Beschreibung

### Technisches Gebiet

Die Erfindung betrifft einen Elektromotor mit einer Drehmomentmesseinrichtung.

### Stand der Technik

Zur Messung des Drehmoments an der Welle einer elektrischen Maschinen sind verschiedene Messeinrichtungen bekannt. Das Drehmoment kann beispielsweise durch eine Drehmomentmesswelle gemessen werden, die im Antriebsstrang zwischen einem Motor und einer angetriebenen Maschine montiert ist. Die Torsion der Drehmomentmesswelle kann beispielsweise mittels Dehnungsmessstreifen erfasst und in ein elektrisches Signal umgewandelt werden. Durch berührungslose Übertragungsverfahren gelangt das Signal an eine feststehende Auswerteeinheit. Die Signalübertragung kann telemetrisch oder optoelektronisch erfolgen.

In der Fahrzeugtechnik werden verschiedene Hilfsaggregate von Elektromotoren angetrieben, unter anderem auch Hilfsaggregate zur Erzeugung einer Verstellbewegung an einem Verteilergetriebe. Die Steuerung eines Verteilergetriebes erfolgt durch ein Getriebesteuergerät, dem als Eingangsinformation das für die Kupplungsbetätigung erforderliche Drehmoment als elektrisches Signal zugeführt ist. Das Drehmoment für die Verstellbewegung kann grundsätzlich aus dem vom Motor aufgenommenen Strom ermittelt werden. Diese Methode ist aber nicht hinreichend genau, da die Verstellbewegung nur von kurzer Zeitdauer ist und der Motor größtenteils im Anlaufstrombereich betrieben wird. Eine direkte Messmethode, wie beispielsweise eine Drehmomentmesswelle im Antriebsstrang, ist aufwendig und die Signalübertragung bei den rauen Betriebsbedingungen eines Kfz störanfällig.

### Darstellung der Erfindung

Der vorliegenden Erfindung liegt die Aufgabe zu Grunde, eine Einrichtung zu schaffen, die auf möglichst einfache Weise eine zuverlässige Erfassung des von einem Elektromotor abgegebenen Drehmoments ermöglicht, und dabei rauen Betriebsbedingungen, wie sie beim Betrieb in einem Kfz auftreten, Stand hält.

Diese Aufgabe wird durch die Merkmale des Anspruchs 1 gelöst. Vorteilhafte Ausgestaltungen sind Gegenstand von abhängigen Ansprüchen.

Gemäß der Erfindung ist das Gehäuse der elektrischen Maschine Teil der Drehmomenterfassungseinrichtung. Das Gehäuse weist einen ringförmigen, drehelastischen Gehäuseabschnitt auf, der als Messzone ausgebildet ist. Die Messzone verbindet drehelastisch einen drehfesten, nabenseitigen Gehäuseabschnitt mit einem gegenüber diesem drehbeweglichen, ständerseitigen Gehäuseabschnitt. Hervorgerufen durch das auf den Ständer zurück wirkende Reaktionsmoment kommt es zu einer Torsion und damit zu einer Relativverdrehung zwischen dem nabenseitigen und den ständerseitigen Gehäuseabschnitt. Der Drehwinkelversatz, der dem an der Läuferwelle abgegebenen oder zugeführten mechanischen Moment entspricht, wird durch eine geeignete Messeinrichtung erfasst.
Charakteristisch für die erfindungsgemäße Konstruktion ist demnach, dass das Gehäuse der Maschine in einem ringförmigen Abschnitt eine Art Torsionsmesskörper bildet, der mit Sensoren zum Detektieren der Torsion versehen ist. Als Sensoren sind verschiedene handelsübliche Messumformer geeignet, die auch den rauen Umgebungsbedingungen in einem Kfz standhalten. Durch die erfindungsgemäße Konstruktion lässt sich bei einem Elektromotor, der die Verstellbewegung eines Verteilergetriebes erzeugt, das Drehmoment sowohl beim Antreiben als auch beim Bremsen vergleichsweise genau und zuverlässig messen.

Konstruktiv günstig ist, wenn der ringförmige Gehäuseabschnitt in einem hohlzylindrischen Abschnitt des ständerseitigen Gehäuseabschnittes oder im Lagerschild des Gehäuses angeordnet ist.

Die Ausführung der drehelastischen Messzone erfolgt typischerweise durch Ausnehmungen im Gehäuse. Dadurch können Biegestege bzw Biegespeichen ausgebildet werden, deren elastische Verformung durch Dehnungsmessstreifen messtechnisch erfasst wird.

Günstig ist eine Anordnung, bei der die Dehnungsmessstreifen im Bereich maximaler Schubbeanspruchung an der äußeren Umfangsfläche eines Biegestegs befestigt sind.

Bei einer Anordnung, bei der zwei Dehnungsmessstreifen an gegenüberliegenden Breitseiten eines Biegesteges bzw einer Biegespeiche angeordnet sind, ist es von Vorteil, die Widerstandswerte in einer Brückenschaltung zu verschalten.

Eine Ausgestaltung der Erfindung ist dadurch gekennzeichnet, dass im ringförmigen Gehäuseabschnitt durch die Tiefe der Ausnehmungen ein dünnwandiger Hohlquerschnitt ausgebildet ist. Die geringe Wandstärke begünstigt die Messung von kleinen Momenten. Gegen quer zur Achse des Motors eingeleitete Kräfte setzen die Biegestege aber einen hohen Widerstand entgegen.

Eine weitere vorteilhafte Ausgestaltung der Erfindung ist dadurch gekennzeichnet, dass im ringförmigen Gehäuseabschnitt Durchbrechungen ausgebildet sind. Die Durchbrechungen verringern die Torsionssteifigkeit der drehelastischen Messzone. Die Messeinrichtung ist dadurch empfindlicher für kleine Momente.

Hierbei ist es günstig, wenn die Durchbrechungen an der äußeren Umfangsfläche des ständerseitigen Gehäuseabschnittes durch ein Gehäusedeckelteil abgedeckt sind. Das Gehäusedeckelteil weist an einer zur Umfangsfläche liegenden Seite eine umlaufende Dichtung auf, wodurch der Innenraum des Elektromotors zum Außenraum hin abgedichtet wird..

Bei einer bevorzugten Ausführungsform ist vorgesehen, dass die Messeinrichtung einen, am ständerseitigen Gehäuseteil festgelegten Messarm aufweist und dass an einem radial außen liegenden Ende des Messarms ein Permanentmagnet befestigt ist, dessen Magnetfeld von einem gestellfesten Hall-Sensor erfasst wird. Der Drehweg wird dadurch am Ort der Messung vergrößert. Entsprechend der Länge des Messarms kann der Drehweg an den Messbereich des Hall-Sensors gut angepasst werden.

Eine bevorzugte Ausführung der Erfindung ist gekennzeichnet durch ein Gehäuse, das aus einem nabenseitigen Gehäuseteil und einem ständerseitigen Gehäuseteil besteht, die in einem ringförmigen Gehäuseabschnitt klauenförmig ineinander greifen und durch ein Elastomer drehelastisch verbunden sind. Durch konstruktive Ausgestaltung des Spaltes zwischen den ineinandergreifenden Klauen und durch Einstellung der gummielastischen Materialeigenschaften lässt sich eine hohe Drehelastizität erreichen. Gleichzeitig sind die beiden Gehäuseteile durch den Gummi verbunden.

Günstig ist hierbei, wenn bei der Herstellung das Elastomer in Spritztechnik eingebracht wird und an den beiden Gehäuseteilen anvulkanisiert wird.

In weiterer Ausgestaltung der Erfindung weist die Messeinrichtung eine elektronische Signalverarbeitung mit einem Microcontroler auf.

Bevorzugt ist eine Ausführung der Erfindung, bei der im ringförmigen, drehelastischen Gehäuseabschnitt drei Biegestege bzw drei Biegespeichen angeordnet sind.

### Kurzbeschreibung der Zeichnungen

Die Erfindung wird nachfolgend in beispielhafter Weise unter Bezugnahme auf die beigefügten Zeichnungen erläutert. Es zeigt:
- Figur 1: eine perspektivische Ansicht eines erfindungsgemäßen Elektromotors;
- Figur 2: eine Schnittzeichnung durch Figur 1 entlang der Linie A-A;
- Figur 3: eine erste Ausführung der Messzone;
- Figur 4: eine zweite Ausführung der Messzone;
- Figur 5: eine Messeinrichtung mit einem Messarm und einem Hall-Positionssensor;
- Figur 6: einen Schnitt gemäß der Linie B-B in Figur 1, bei der die drehelastische Messzone durch Ausnehmungen gebildet ist;
- Figur 7: einen Schnitt gemäß der Linie B-B in Figur 1, bei der die drehelastische Messzone durch Durchbrüche gebildet ist;
- Figur 8: eine Variante der Erfindung bei der in der Messzone zwei klauenförmig ineinander greifende Gehäuseteile durch ein Elastomer verbunden sind;
- Figur 9: einen Schnitt durch die Messzone gemäß der Linie C-C in Figur 8.

### Ausführung der Erfindung

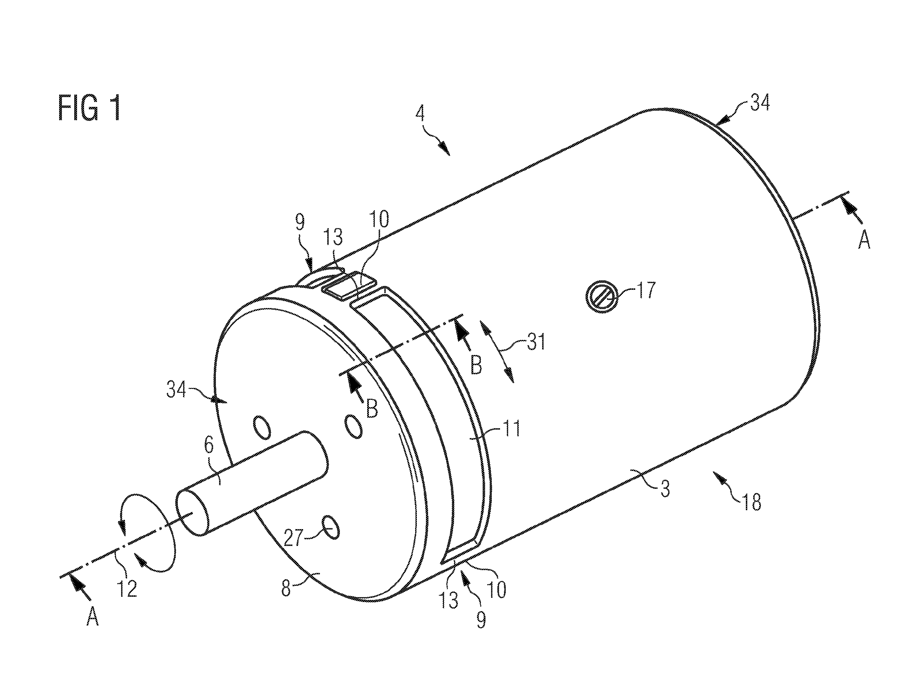

In Figur 1 ist ein Elektromotor 4 zu sehen, dessen Gehäuse 18 Teil einer Drehmomentmesseinrichtung bildet. Wenn der Elektromotor 4 am Lagerschild im Bereich eines nabenseitigen Gehäuseabschnitts 8 fixiert wird und der Ständer demgegenüber frei beweglich ist, wirkt das an der Läuferwelle 6 abgegebene mechanische Moment als Reaktionsmoment (Pfeil 31) auf den Ständer zurück und kann in einer drehelastisch ausgebildeten Messzone 9 durch eine geeignete Sensoreinrichtung erfasst werden.

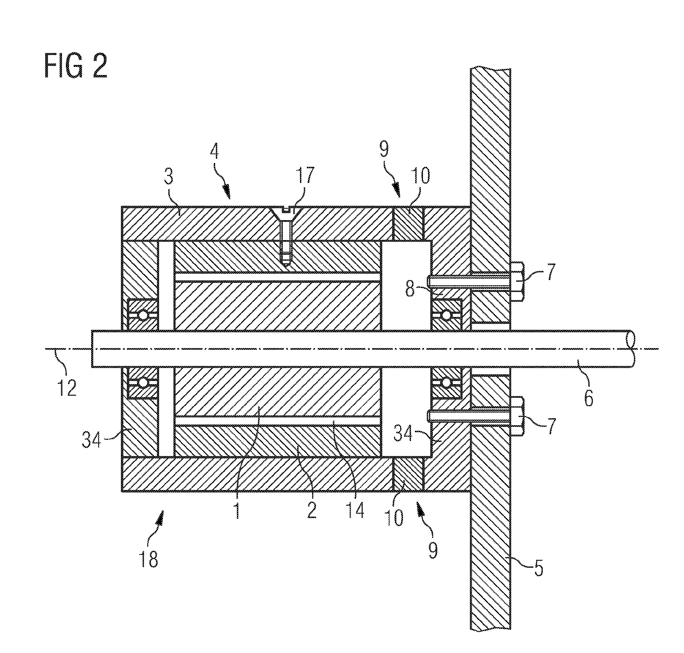

Die Wirkungsweise der Drehmomentmesseinrichtung lässt sich am besten an Hand der Figur 2 erläutern. Wie aus der Schnittzeichnung zu ersehen ist, ist der nabenseitige Abschnitt 8 des Gehäuses 18 mittels Befestigungsschrauben 7 an einem gestellfesten Maschinenteil 5 befestigt. Der ständerseitige Gehäuseabschnitt 3 ist frei aufgehängt. Die Messzone 9 bildet ein drehelastisches Verbindungsglied zwischen dem Gehäuseabschnitt 3 und dem Gehäuseabschnitt 8. Bei Betrieb des Elektromotors 4 wirkt das an der Läuferwelle 6 abgegebene Drehmoment über den Läufer 1 und über den Luftspalt 14 als Reaktionsmoment auf den Ständer 2. Über die Ständerbefestigung 17 wird dieses Reaktionsmoment auf den hohlzylindrischen Abschnitt 3 des Gehäuses 18 übertragen. Dies führt zu einer Torsionsbeanspruchung der drehelastischen Messzone 9. Die Torsion wird als Drehwinkelversatz zwischen dem festgelegten Gehäuseabschnitt 8 und dem drehbeweglichen ständerseitigen Gehäuseabschnitt 3 durch die Sensoreinrichtung 10 erfasst. Der Drehwinkelversatz entspricht dem an der Läuferwelle 6 des Elektromotors 4 abgegebenen mechanischen Drehmoment. Gleiches gilt für ein im generatorischen Betriebsfall an der Welle 6 zugeführtes Moment.Die Ausbildung der Messzone und die Sensoreinrichtung wird im folgenden näher erläutert.

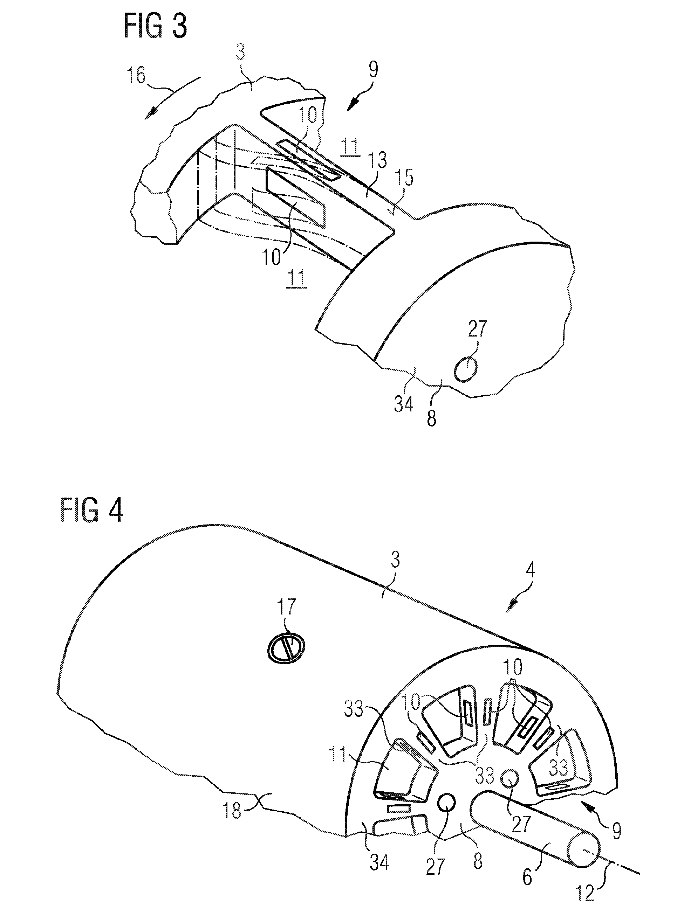

Die Figur 3 zeigt eine Detailzeichnung im Bereich der Messzone 9 gemäß einem ersten Ausführungsbeispiel der Erfindung. In einem Abschnitt zwischen dem ständerseitigen Gehäuseabschnitt 3 und dem festgelegten nabenseitigen Gehäuseabschnitt 8 weist das Gehäuse ringnutförmige Ausnehmungen 11 auf. Zwischen angrenzenden Ausnehmungen 11 sind Biegestege 13 ausgebildet. An jedem Biegesteg 13 ist an der Umfangsfläche 15 ein Dehnungsmessstreifen 10 befestigt. Solange auf die Messzone 9 kein Reaktionsmoment wirkt, erstreckt sich der Biegesteg 13 in Richtung der Achse 12. Im Belastungsfall, der in Figur 3 durch den Pfeil 16 veranschaulicht ist, verwindet sich der Biegesteg 13. Gerade Mantellinien gehen in Schraubenlinien über. Die Verwindung ist in der Zeichnung der Figur 3 durch eine unterbrochene Linieführung dargestellt. Die maximale Schubbeanspruchung tritt an der äußeren Umfangsfläche 15 des Biegestegs 13 auf. Der Dehnungsmessstreifen 10, der an die Umfangsfläche 15 geklebt ist, erfasst diese elastische Verformung. Durch eine an sich bekannte und in Figur 3 nicht näher dargestellte Messschaltung wird die elastische Verformung in ein elektrisches Signal umgesetzt, das dem an der Welle 6 abgegebenen Drehmoment entspricht.

Die Dehnungsmessstreifen können aber auch an den zur Ausnehmung 11 liegenden Breitseiten angeordnet sein. Hinsichtlich der Auswertung ist es günstig, wenn dabei zwei Dehnungsmessstreifen, die jeweils an gegenüberliegenden Breitseiten eines Biegestegs 13 angeordnet sind, in einer Brückenschaltung verschaltet sind.

In Figur 4 ist eine zweite Ausführungsform der Messzone 9 dargestellt. Der Elektromotor 4 ist am Lagerschild 34 an den Bohrungen 27 befestigt. Der ständerseitige Gehäuseabschnitt 3 ist demgegenüber wieder drehbeweglich. Die drehelastische Messzone 9 liegt hier nicht im hohlzylindrischen Teil des Gehäuses 18, sondern im Bereich des Lagerschilds 34. Die Tiefe der Ausnehmungen 11 erstreckt sich in axialer Richtung des Lagerschildes. Zwischen in Umfangsrichtung benachbart liegenden Ausnehmungen werden Biegespeichen 33 gebildet. Die Biegespeichen 33 bilden eine Fortsetzung des nabenseitigen Gehäuseabschnittes 8 und erstrecken sich in radialer Richtung. Die messtechnische Erfassung des Drehmoments erfolgt analog zum ersten Ausführungsbeispiel. Auch hier sind an diesen Biegespeichen 33 Dehnungsmessstreifen 10 befestigt. Die Dehnungsmessstreifen 10 erfassen die elastische Verformung der Biegespeichen 33. Die Torsion zwischen den Abschnitten 3 und 8 des Gehäuses 18 ist wieder ein Maß für das an der Läuferwelle 6 abgegebene oder zugeführte mechanische Drehmoment.

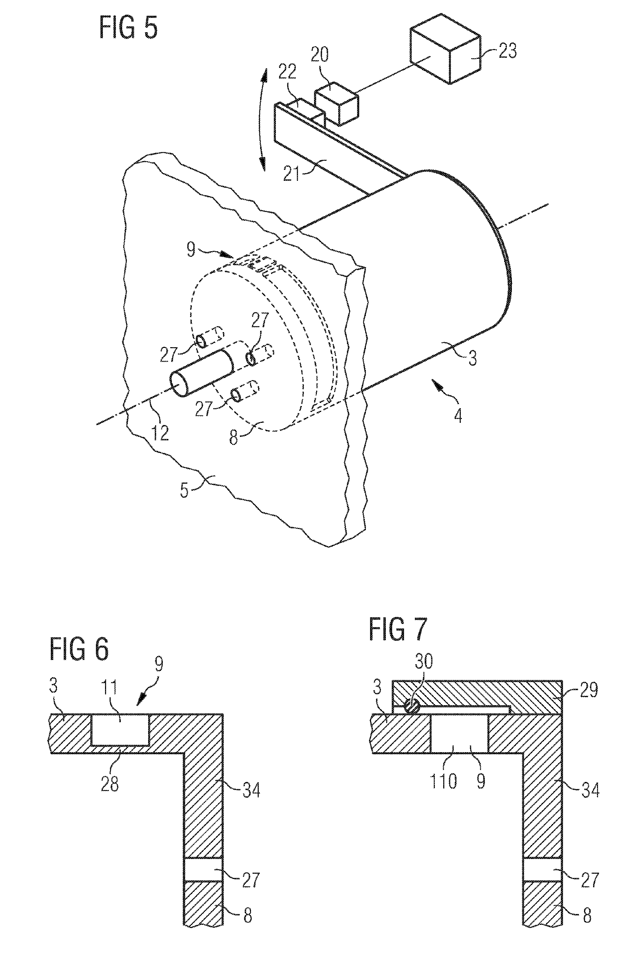

Die Erfassung des Drehwinkelversatzes kann aber auch auf andere Art und Weise erfolgen. Dies ist in Figur 5 an Hand einer Messeinrichtung mit einem Messarm gezeigt. Die Verwindung des Gehäuseabschnittes 3 gegenüber den am Gestell 5 befestigten Lagerschild wird durch einen magnetischen Drehwinkelaufnehmer erfasst. Am Gehäuseabschnitt 3 ist ein Messarm 21 angebracht. Am radial außen liegenden Ende dieses Messarms ist ein Permanentmagnet 22 befestigt, dessen Magnetfeld ein gestellfest angeordneter Hallsensor 20 erfasst. Dem Hallsensor 20 ist eine elektronische Signalverarbeitung 23 nachgeschaltet.
Ein Elektromotor der in einem Kfz eingesetzt wird um die Verstellbewegung an einem Verteilergetriebe zu erzeugen, benötigt hierfür etwa ein Moment von 0,5 Nm. Durch eine geeignete Länge des Zeigers lässt sich die Torsion auf einen Drehweg von etwa einem Millimeter übersetzen, so dass das Drehmoment durch einen handelsüblichen Hall-ASIC erfasst werden kann. Durch die verschiedenen Reibungseinflüsse entspricht das gemessene Drehmoment zwar nicht exakt dem gesuchten Drehmoment an der Kupplungsbetätigung. Da sich der Reibungsfehler aber beim Zustellen negativ und beim Lüften positiv auswirkt, kann man die Reibung durch einen Microcontroler in der elektronischen Signalverarbeitung 23 berechnen und den Messwert entsprechend korrigieren.

In Figur 6 ist ein Schnitt durch eine Messzone 9 dargestellt, die durch außenumfangsseitige ringnutförmige Ausnehmungen 11 gebildet ist. Die Tiefe der Ausnehmung 11 ist so gewählt, dass am Boden der Ausnehmung 11 ein sehr dünnwandiger Hohlquerschnitt 28 verbleibt.

Demgegenüber erstreckt sich in Figur 7 die Ausnehmung über die gesamte Wanddicke des hohlzylindrischen Gehäuseteils 3. Der Durchbruch 110 der Gehäusewand 3 ist außenseitig durch ein Gehäusedeckelteil 29 abgedeckt, das an einer Seite im Bereich des Lagerschildes 34 befestigt ist und an der anderen Seite eine außenumfangsseitig am Gehäuseabschnitt 3 anliegende Dichtung 30 aufweist.

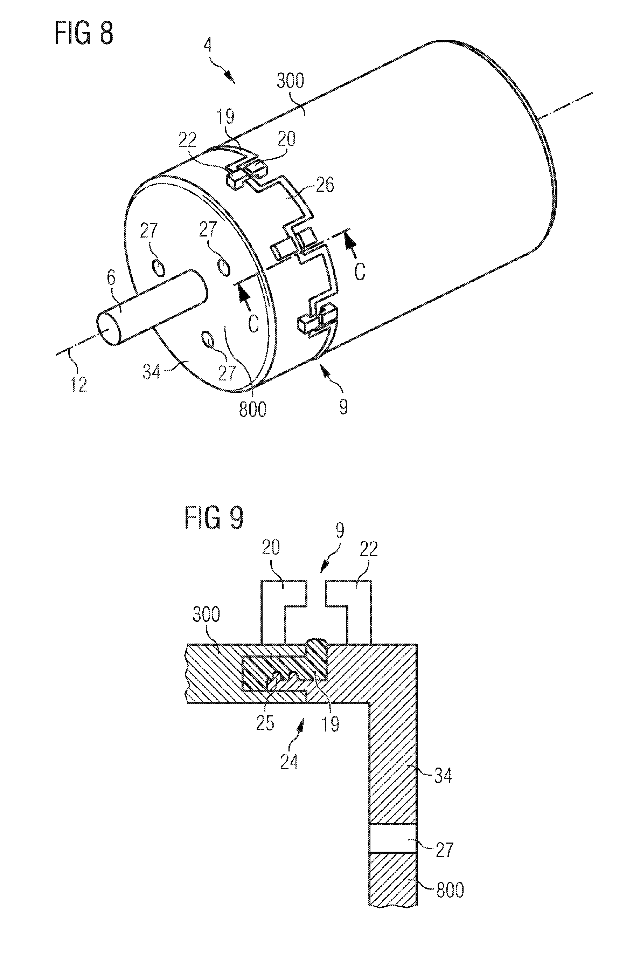

In Figur 8 ist eine Variante der Erfindung gezeigt, bei der das Gehäuse aus zwei getrennten Teilen besteht, die in der Messzone klauenförmig ineinander greifen, wobei ein Elastomer die drehelastische Verbindung herstellt. Ein Schnitt durch diese Ausbildung der Messzone ist in Figur 9 dargestellt. Eine anvulkanisierte Gummischicht 19 verbindet das ständerseitige Gehäuseteil 300 mit dem an den Bohrungen 27 festgelegten nabenseitigen Gehäuseteil 800 und dichtet den Innenraum des Motors ab. Die beiden Gehäuseteile 300 und 800 sind im Verbindungsbereich durch eine Gleitpassung gelagert. Durch eine geeignete Einstellung der elastischen Eigenschaften der Gummischicht 19 und durch die Ausbildung eines Profils 25 im Verbindungsbereich lässt sich die Torsion zwischen den Teilen 300 und 800 durch handelsübliche Hallsensoren 20, die direkt in der Messzone angeordnet sind, in ein elektrisches Signal umwandeln, das dem mechanischen Moment an der Läuferwelle 6 entspricht.

### Liste der verwendeten Bezugszeichen

- 1: Läufer
- 2: Ständer
- 3: ständerseitiger Gehäuseabschnitt
- 4: Elektromotor
- 5: Gestell
- 6: Läuferwelle
- 7: Befestigungsschrauben
- 8: nabenseitiger Gehäuseabschnitt
- 9: Messzone, ringförmiger Gehäuseabschnitt
- 10: Dehnungsmessstreifen
- 11: Ausnehmungen
- 12: Achse
- 13: Biegesteg
- 14: Luftspalt
- 15: Umfangsfläche Biegesteg
- 16: Pfeil
- 17: Ständerbefestigung
- 18: Gehäuse
- 19: Elastomer
- 20: Hallsensor
- 21: Zeiger, Messarm
- 22: Dauermagnet
- 23: Elektronische Signalverarbeitung
- 24: Fügebereich
- 25: Profil
- 26: Klauenverbindung
- 27: Bohrung
- 28: dünnwandiger Hohlquerschnitt
- 29: Gehäusedeckelteil
- 30: Dichtung
- 31: Doppelpfeil, Reaktionsmoment
- 32: Xx
- 33: Biegespeiche
- 34: Lagerschild
- 110: Durchbruch
- 300: ständerseitiges Gehäuseteil
- 800: nabenseitiges Gehäuseteil

## Patentansprüche

1. Elektrische Maschine, insbesondere Elektromotor mit einer Drehmomentmesseinrichtung, umfassend:
- ein Gehäuse (18) mit einem ringförmigen Gehäuseabschnitt (9), der einen nabenseitig festgelegten Gehäuseabschnitt (8) und einen gegenüber diesen drehbaren ständerseitigen Gehäuseabschnitt (3) drehelastisch so verbindet, dass die Rückwirkung eines Drehmoments an der Läuferwelle (6) den ständerseitigen Gehäuseabschnitt (3) gegenüber den nabenseitigen Gehäuseabschnitt (8) tordiert, und
- eine Messeinrichtung (10; 20,22; 23) zum Erfassen der Torsion.

2. Elektromotor nach Anspruch 2, **dadurch gekennzeichnet**, das der ringförmige Gehäuseabschnitt (9) in einem hohlzylindrischen Abschnitt des ständerseitigen Gehäuseabschnittes (3)angeordnet ist.

3. Elektromotor nach Anspruch 2, **dadurch gekennzeichnet, dass** der ringförmige Gehäuseabschnitt (9) in einem Lagerschild (34) des Gehäuses (18) angeordnet ist.

4. Elektromotor nach Anspruch 2 oder 3, **dadurch gekennzeichnet, dass** der ringförmige drehelastische Gehäuseabschnitt durch Ausnehmungen (11) im Gehäuse (18) gebildet ist.

5. Elektromotor nach Anspruch 2 und 4, **dadurch gekennzeichnet, dass** zwischen angrenzenden Ausnehmungen (11) Biegestege (13) ausgebildet sind.

6. Elektromotor nach Anspruch 3 und 4, **dadurch gekennzeichnet, dass** zwischen angrenzenden Ausnehmungen (11) Biegespeichen (33) ausgebildet sind.

7. Elektromotor nach Anspruch 5, **dadurch gekennzeichnet, dass** die Biegestege (13) eine Schmalseite aufweisen, welche sich in Richtung der Drehachse (12) des Motors (4) erstreckt.

8. Elektromotor nach Anspruch 7, **dadurch gekennzeichnet, dass** die Messeinrichtung (10; 20,22; 23) Dehnungsmessstreifen (10) umfasst, die an jedem Biegesteg (13) an einer äußeren Umfangsfläche (15) angeordnet ist.

9. Elektromotor nach Anspruch 8, **dadurch gekennzeichnet, dass** die Messeinrichtung (10; 20,22; 23) Dehnungsmessstreifen (10) umfasst, die an jedem Biegesteg (13) an einer jeweils zu einer Ausnehmung (11) liegenden Breitseite angeordnet sind.

10. Elektromotor nach Anspruch 9, **dadurch gekennzeichnet, dass** die Dehnungsmessstreifen (10) in einer Brückenschaltung verschaltet sind.

11. Elektromotor nach Anspruch 4, **dadurch gekennzeichnet, dass** im ringförmigen Gehäuseabschnitt (9) durch die Tiefe der Ausnehmungen (11) ein dünnwandiger Hohlquerschnitt (28)ausgebildet ist.

12. Elektromotor nach Anspruch 4, **dadurch gekennzeichnet, dass** im ringförmigen Gehäuseabschnitt (9) Durchbrechungen (110) ausgebildet sind.

13. Elektromotor nach Anspruch 12, **dadurch gekennzeichnet, dass** die Durchbrechungen (110) an der äußeren Umfangsfläche des ständerseitigen Gehäuseabschnittes (3) durch ein Gehäusedeckelteil (29) abgedeckt sind.

14. Elektromotor nach Anspruch 13, **dadurch gekennzeichnet, dass** das Gehäusedeckelteil (29) an einer zur Umfangsfläche liegenden Seite eine umlaufende Dichtung (30) aufweist.

15. Elektromotor nach Anspruch 5 und 15, **dadurch gekennzeichnet, dass** die Messeinrichtung (10; 20,22; 23) einen, am ständerseitigen Gehäuseteil festgelegten Messarm (21) aufweist, dass an einem radial außen liegenden Ende des Messarms (21) ein Permanentmagnet (22) befestigt ist, dessen Magnetfeld von einem gestellfesten Hall-Sensor (20) erfasst wird.

16. Elektromotor nach Anspruch 2, **gekennzeichnet durch** ein Gehäuse (18) das aus einem nabenseitigen Gehäuseteil (800) und einem ständerseitigen Gehäuseteil (300) besteht, die in einem ringförmigen Gehäuseabschnitt (9) klauenförmig ineinander greifen und **durch** ein Elastomer (19) drehelastisch verbunden sind.

17. Elektromotor nach Anspruch 16, **dadurch gekennzeichnet, dass** das Elastomer (19) durch Spritztechnik anvulkanisiert ist.

18. Elektromotor nach Anspruch 16, **dadurch gekennzeichnet, dass** die Messeinrichtung (10; 20,22; 23) eine Hall-Sensor-Einrichtung (20,22) umfasst, die an der Umfangsfläche des Gehäuses (18) befestigt ist.

19. Elektromotor nach Anspruch 5 oder 6, **dadurch gekennzeichnet, dass** im ringförmigen Gehäuseabschnitt (9) drei Biegestege (13) oder drei Biegespeichen (33) angeordnet sind.

20. Elektromotor nach einem der vorstehenden Ansprüche, **dadurch gekennzeichnet, dass** die Messeinrichtung (10; 20,22; 23) eine elektronische Signalverarbeitung (23) mit einem Microcontroler enthält.

21. Elektromotor nach einem der vorstehenden Ansprüche, **dadurch gekennzeichnet, dass** die Messeinrichtung (10; 20,22; 23) mit einer Getriebesteuerung eines Verteilergetriebes eines Kraftfahrzeugs verbunden ist, der ein um einen Reibfehler korrigierter Messwert zugeführt wird.
